# EUROPEAN PATENT APPLICATION

(11) **EP 4 806 841 A1**
(43) Date of publication of application: **16.09.2026**
(21) Application number: 25162949.9
(22) Date of filing: 11.03.2025
(51) Int. Cl.: C01B 3/50, C01C 1/04, B01D 53/26, C01B 3/38, C01B 3/48, C01B 3/02, C01B 3/36

(54) **PROCESS AND SYSTEM FOR REGENERATING A DRYER IN A SYNGAS DRYER ASSEMBLY IN AN AMMONIA PRODUCTION PLANT**

(71) Applicant: Yara International ASA, 0277 Oslo (NO)
(72) Inventor: Jabbar, Abdul, 0277 Oslo (NO); Ghafoor, Faisal, 0277 Oslo (NO)
(74) Representative: De Clercq & Partners

(57) **Abstract**

The present disclosure provides a process for regenerating a dryer of a syngas dryer assembly comprising one or more dryers in an ammonia plant (100), the process comprising steps of: (i) contacting a charge of desulphurized natural gas (1) and steam (2), with air, oxygen-enriched air or oxygen, in a conversion section resulting in a synthesis gas comprising hydrogen, CO and CO₂, the conversion section comprising at least one furnace; (ii) subjecting the synthesis gas obtained in step (i) to shift conversion, carbon dioxide removal and methanation, thereby obtaining a stream of treated syngas (7') and further passing the treated syngas (7') through a first syngas compressor (8) to obtain a compressed syngas (8'); (iii) introducing the compressed syngas (8') to a first dryer (9) of the syngas dryer assembly, located downstream of the first syngas compressor (8) to absorb water resulting in a dried make-up syngas, wherein the syngas dryer assembly further comprises a second dryer (14) positioned in parallel to the first dryer (9), wherein the second dryer is a saturated dryer requiring regeneration, wherein a part of the dried make-up syngas (9") is compressed in a second syngas compressor (10) to provide a compressed make-up syngas (10') that is further supplied to an ammonia synthesis loop (11) forming ammonia (11') and generating a purge gas (11") comprising hydrogen, ammonia, methane and argon; and (iv) introducing the purge gas (11") to a purge gas recovery unit (12), whereby ammonia and hydrogen are recovered and a reject gas (12') is generated, wherein a part of the reject gas (12a) is introduced to a third dryer (13) positioned in series to the second dryer (14) resulting in a dried reject gas (13'), wherein a part of the dried reject gas (13') is supplied to the second dryer (14), located downstream of the third dryer (13), thereby regenerating the second dryer (14) and resulting in a used reject gas (14'). The disclosure further provides a plant for producing ammonia, the use of a reject gas emerging from the purge gas recovery unit in the ammonia plant to perform the process of the disclosure and a method of revamping the ammonia plant.

## Description

### TECHNICAL FIELD

The present disclosure relates to a field of industrial production of ammonia. In particular, the present disclosure concerns a system and a process with improved technique for regeneration of syngas dryers in an ammonia production plant.

### BACKGROUND

Ammonia is an essential chemical due to its crucial role in fertilizer production. Over the years, various processes have been developed to produce ammonia. Typically, in the front end of a conventional ammonia production plant, gaseous hydrogen is produced from the fossil sources, such as natural gas. The nitrogen is conventionally produced using an air splitting apparatus. The gaseous hydrogen is then reacted with nitrogen in a 3 to 1 ratio in the presence of a catalyst to produce ammonia.

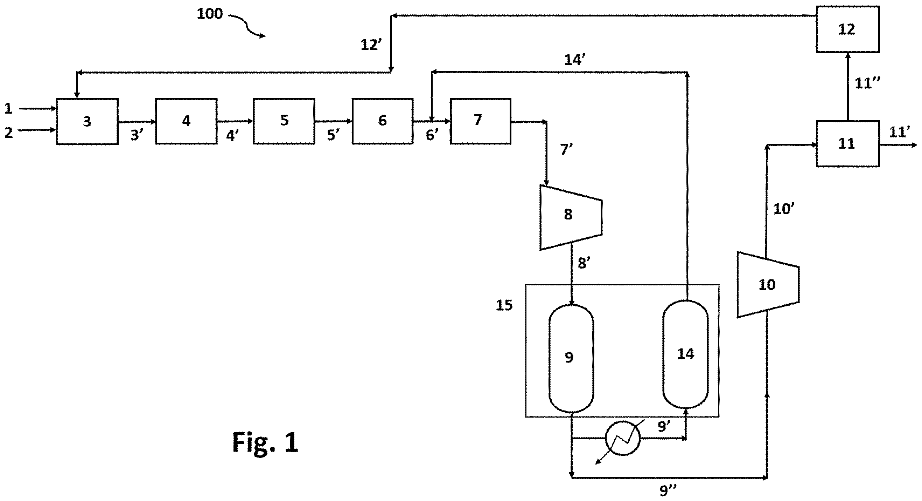

A typical prior art ammonia production plant is schematically depicted in Fig. 1. In the front end of the plant, the conversion section comprises one or more reforming units, such as a primary reformer (3) and a secondary reformer (4). The primary reformer consists of a furnace or burners usually fueled by natural gas and waste gases from the process and a reactor. A charge of desulphurized natural gas (1) and steam (2) is processed through primary reformer (3) to obtain a first synthesis gas (3') comprising hydrogen, CO, and CO₂. The first synthesis gas (3') and a stream of pressurized process air (not shown) is then fed to the secondary reformer (4) to produce a second synthesis gas (4') comprising hydrogen, water, nitrogen, CO, and CO₂. Oxygen and nitrogen are typically provided as the process air that is fed into the secondary reformer. The second synthesis gas (4') is further subjected to a shift conversion in a shift conversion reactor (5) after excess heat has been recovered from the second synthesis gas (4') resulting in a CO₂ enriched stream (5'). In a further step, carbon dioxide is removed from the CO₂ enriched stream (5') in a carbon dioxide removal unit (6) resulting in a CO₂ depleted syngas (6'). The residual carbon monoxide (CO) and carbon dioxide (CO₂) are almost eliminated in a methanator (7) resulting in a stream of syngas (7') mainly composed of hydrogen and nitrogen.

Some residual CO and CO₂, however, are still found in the gas after shift conversion and CO₂ removal, together with impurities such as methane and argon. Hence, the syngas (7') needs a further purification that typically involves removal of residual CO₂ and water. Carbon dioxide and water must be removed before the nitrogen wash, because they would freeze at the low temperature of the latter. Usually, said step is performed by passing the syngas (7') through a first syngas compressor (8) to obtain a compressed syngas stream (8') and therafter passing the compressed syngas stream (8') through one or more dryers (9, 14) comprising suitable adsorbents. Said dryers may use molecular sieves, silica gel, alumina beeds for adsoprtion of water and impurities. The dryers form a so-called dryer assembly (15), including at least two dryers, positioned in parallel, of which one dryer is in operation and the other dryer is out of operation and in need of regeneration. Typically, during operation of the ammonia production process, when the dryer in operation starts absorbing water from the hot syngas stream, it gradually becomes charged or saturated with water. When this dryer is charged or saturated with water to an optimum level, it is subjected to regeneration using a suitable regeneration medium and in the meantime a regenarated dryer is utilized.

The configuration of Fig. 1 is such that, a first dryer (9) is the dryer in operation that provides a dried make-up syngas and a second dryer (14) is out of operation that requires a suitable dry gas as a regeneration medium. A part of the dried make-up syngas (9') from the first dryer (9) is first heated and then used to regenerate the second dryer (14). The dried syngas stream (14') emerging from the second dryer (14) is recycled back to the inlet of methantor (7) to mix with the CO₂ depleted syngas (6') from CO₂ removal section (6). The rest of the dried make-up syngas (9") is passed through a second syngas compressor (10) to obtain a compressed make-up syngas (10') that enters the ammonia synthesis loop (11) producing ammonia (11') and a purge gas (11") comprising hydrogen, nitrogen, ammonia, methane and argon. The purge gas hence obtained is fed to a purge gas recovery unit (12) to recover ammonia and hydrogen. The reject gas (12') emerging from the purge gas recovery unit (12), is used as a fuel in furnace of the primary reformer (3). The recycling of the stream (14') from compressor interstage discharge to the inlet of the methantor increases the power of the synthesis gas compressor.

However, this prior art configuration of the dryers has some drawbacks. The regeneration of the dryer usually happens at a pressure of around 33 bar and in some cases at around 56.5 bar. Such a regeneration at higher pressure requires higher flow rate of the regeneration medium, particularly the dried make-up syngas. Further, the regeneration of the dryer requires a portion of the dried make-up syngas which is a source of cost. Using a relevant portion of purified and dried make-up syngas as regeneration medium is not desirable, due to the relevant energy penalty. Furthermore, the dryer is an expensive item, especially when large volumes are required.

There is thus a need for an improved system and ammonia production plant and process which can utilize an improved technique for regeneration of the syngas dryers. There is also a need to provide an alternative regeneration medium that is efficient and improves the absorption of water and other impurities.

### SUMMARY

The inventors have developed a process and system for regenerating a dryer in a syngas dryer assembly in an ammonia production plant, which addresses one or more of the above-mentioned drawbacks, and which makes it possible for the ammonia production plant to produce ammonia with effective regeneration of the syngas dryers at a desired pressure.

One aspect of the present disclosure provides a process for regenerating a dryer of a syngas dryer assembly comprising one or more dryers in an ammonia plant, the process comprising steps of:
(i) contacting a charge of desulphurized natural gas and steam, with air, oxygen-enriched air or oxygen, in a conversion section resulting in a synthesis gas comprising hydrogen, CO and CO₂, the conversion section comprising at least one furnace;
(ii) subjecting the synthesis gas obtained in step (i) to shift conversion, carbon dioxide removal and methanation, thereby obtaining a stream of treated syngas and further passing the treated syngas through a first syngas compressor to obtain a compressed syngas;
(iii) introducing the compressed syngas to a first dryer of the syngas dryer assembly, located downstream of the first syngas compressor, to absorb water resulting in a dried make-up syngas, wherein the syngas dryer assembly further comprises a second dryer positioned in parallel to the first dryer, wherein the second dryer is a saturated dryer requiring regeneration, wherein a part of the dried make-up syngas is compressed in a second syngas compressor to provide a compressed make-up syngas that is further supplied to an ammonia synthesis loop forming ammonia and generating a purge gas comprising hydrogen, ammonia, methane and argon; and
(iv) introducing the purge gas to a purge gas recovery unit, whereby ammonia and hydrogen are recovered and a reject gas is generated, wherein a part of the reject gas is introduced to a third dryer positioned in series with the second dryer resulting in a dried reject gas, wherein at least a part of the dried reject gas is supplied to the second dryer of the syngas dryer assembly, wherein the second dryer is located downstream of the third dryer, thereby regenerating the second dryer and resulting in a used reject gas.

In one embodiment according to the process of the disclosure, the conversion of the desulphurized natural gas into the synthesis gas includes a step of autothermal reforming, or a step of partial oxidation, the step of autothermal reforming or partial oxidation is performed with a steam/carbon ratio not greater than 2; or the conversion of the desulphurized natural gas into the synthesis gas includes primary reforming of the natural gas in the presence of steam performed in a primary reformer followed by air-fired secondary reforming performed in a secondary reformer.

In one embodiment according to the process of the disclosure, the process further comprises a step of recirculating the used reject gas emerging from the second dryer to a burner of the primary reformer, particularly wherein the process further comprises a step of mixing a second part of the reject gas with the used reject gas before recirculating to a burner of the primary reformer.

In one embodiment according to the process of the disclosure, the process further comprises a step of recirculating the used reject gas emerging from the second dryer to a fired heater, particularly wherein the process further comprises a step of mixing a second part of the reject gas with the used reject gas before recirculating to the fired heater.

In one embodiment according to the process of the disclosure, the process further comprises a step of regeneration of the third dryer with a second part of the dried make-up syngas or by mixing the second part of the dried make-up syngas with a second part of the dried reject gas.

In one embodiment according to the process of the disclosure, the process further comprises a step of regeneration of the second dryer with a second part of the dried make-up syngas or the process further comprises a step of regeneration of the second dryer with a second part of the dried make-up syngas mixed with a second part of the dried reject gas. In one embodiment according to the process of the disclosure, the regeneration of the second dryer takes place at a pressure in the range of 1-20 bar, preferably at a pressure of 5-15 bar.

In one embodiment according to the process of the disclosure, the adsorption time of the first dryer and the second dryer is in the range of 10-50 hours, preferably in the range of 20-30 hours.

In one embodiment according to the process of the disclosure, the adsorption time of the third dryer is in the range of 10-50 days, preferably in the range of 20-40 days.

In one embodiment according to the process of the disclosure, the regeneration time of the second dryer and the third dryer is in the range of 10-15 hours, preferably 12 hours.

In one embodiment according to the process of the disclosure, the first dryer, the second dryer and the third dryer comprise of an adsorbent selected from the group consisting of molecular sieves, silica gel, and alumina beads.

Another aspect of the present disclosure provides a system for regenerating a dryer of a syngas dryer assembly comprising one or more dryers in an ammonia plant, the system comprising:
- a conversion section for contacting a charge of desulphurized natural gas and steam, with air, oxygen-enriched air or oxygen and resulting in a synthesis gas comprising hydrogen, water, CO and CO₂, the conversion section comprises at least one furnace;
- a treatment section comprising a shift conversion reactor, a carbon dioxide removal unit and a methanation unit, wherein the synthesis gas emerging from the conversion section is subjected to shift conversion, carbon dioxide removal and methanation, thereby obtaining a stream of treated syngas, the syngas is further passed through a first syngas compressor to obtain a compressed syngas;
- a syngas dryer assembly located downstream of the first syngas compressor, comprising a first dryer configured to receive the compressed syngas and absorb water resulting in a dried make-up syngas, and a second dryer positioned in parallel to the first dryer, wherein the second dryer is a saturated dryer requiring regeneration; a second syngas compressor located downstream of the first dryer to receive and compress a part of the dried make-up syngas to provide a compressed make-up syngas that is further supplied to an ammonia synthesis loop forming ammonia and generating a purge gas comprising hydrogen, nitrogen, ammonia, methane and argon; and
- a purge gas recovery unit for receiving the purge gas whereby ammonia and hydrogen are recovered and a reject gas is generated, wherein a third dryer located downstream of the purge gas recovery unit and positioned in series with the second dryer, is configured to receive a part of the reject gas resulting in a dried reject gas, wherein the second dryer located downstream of the third dryer is configured to receive the dried reject gas thereby regenerating the second dryer and resulting in a used reject gas.

In one embodiment according to the system of the disclosure, the conversion section comprises a fired heater located upstream of a pre-reformer, an autothermal reformer located downstream of the pre-reformer and a steam generator, the conversion section configured for performing autothermal reforming or partial oxidation resulting in a synthesis gas or the conversion section comprises a primary reformer and a secondary reformer located downstream of the primary reformer, the conversion section configured for performing primary reforming of desulphurized natural gas in the presence of steam in the primary reformer followed by air-fired secondary reforming performed in a secondary reformer.

In one embodiment according to the system of the disclosure, the plant further comprises a means for recirculating the used reject gas emerging from the second dryer to a burner of the primary reformer, particularly wherein the plant further comprises a means for mixing the second part of the reject gas with the used reject gas and a means for recirculating the resulting mixture to a burner of the primary reformer.

In one embodiment according to the system of the disclosure, the plant further comprises a means for recirculating the used reject gas emerging from the second dryer to the fired heater, particularly wherein the plant further comprises a means for mixing the second part of the reject gas with the used reject gas and a means for recirculating the resulting mixture to the fired heater.

In one embodiment according to the system of the disclosure, the regeneration of the second dryer takes place at a pressure in the range of 1-20 bar, preferably at a pressure of 5-15 bar.

In one embodiment according to the system of the disclosure, the adsorption time of the first dryer and the second dryer is in the range of 10-50 hours, preferably in the range of 20-30 hours.

In one embodiment according to the system of the disclosure, the adsorption time of the third dryer is in the range of 10-50 days, preferably in the range of 20-40 days.

In one embodiment according to the system of the disclosure, the regeneration time of the second dryer and the third dryer is in the range of 10-15 hours, preferably 12 hours.

In one embodiment according to the system of the disclosure, the system further comprises a means for providing a second part of the dried make-up syngas to the third dryer requiring regeneration or a means for mixing the second part of the dried make-up syngas with a second part of the dried reject gas and means for providing the resulting mixture to the third dryer requiring regeneration.

In one embodiment according to the system of the disclosure, the first dryer, the second dryer and the third dryer comprise of an adsorbent selected from the group consisting of molecular sieve, silica gel, and alumina beads.

Another aspect of the present disclosure provides use of a reject gas emerging from the purge gas recovery unit of an ammonia production plant, essentially free of carbon monoxide and carbon dioxide and comprising nitrogen, methane and argon for the regeneration of a saturated syngas dryer of a syngas dryer assembly, particularly to perform the process according to present disclosure.

Another aspect of the present disclosure provides a method of revamping an existing plant for producing ammonia from natural gas, the existing plant comprising:
- a conversion section for contacting a charge of desulphurized natural gas and steam, with air, oxygen-enriched air or oxygen and resulting in a synthesis gas comprising hydrogen, water, CO and CO₂, the conversion section comprises at least one furnace;
- a treatment section comprising a shift conversion reactor, a carbon dioxide removal unit and a methanation unit, wherein the synthesis gas emerging from the conversion section is subjected to shift conversion, carbon dioxide removal and methanation, thereby obtaining a stream of treated syngas, the syngas is further passed through a first syngas compressor to obtain a compressed syngas;
- a syngas dryer assembly located downstream of the first syngas compressor and comprising a first dryer configured to receive the compressed syngas and absorb water resulting in a dried make-up syngas, and a second dryer positioned in parallel to the first syngas dryer, wherein the second dryer is a saturated dryer requiring regeneration; a second syngas compressor located downstream of the first dryer to receive and compress a part of the dried make-up syngas to provide a compressed make-up syngas that is further supplied to an ammonia synthesis loop forming ammonia and generating a purge gas comprising hydrogen, nitrogen, ammonia, methane and argon; and
- a purge gas recovery unit for receiving the purge gas whereby ammonia and hydrogen are recovered and a reject gas is generated;
wherein the method comprises the steps of:
(i) installing a third dryer downstream of the purge gas recovery unit and positioned in series with the second dryer configured for receiving a part of the reject gas resulting in a dried reject gas; and
(ii) providing a part of the dried reject gas emerging from the third dryer to the second dryer located downstream of the third dryer, thereby regenerating the second dryer, and resulting in a used reject gas.

In one embodiment according to the method of revamping of the disclosure, the method further comprises a step of recirculating the used reject gas emerging from the second dryer to a burner of the primary reformer or the method further comprises a step of mixing a second part of the reject gas with the used reject gas before recirculating to a burner of the primary reformer.

In one embodiment according to the method of revamping of the disclosure, the method further comprises a step of regeneration of the third dryer with a second part of the dried make-up syngas or by mixing the second part of the dried make-up syngas with a second part of the dried reject gas.

In one embodiment according to the method of revamping of the disclosure, wherein the conversion section of the existing plant comprises a primary reformer and a secondary reformer and wherein the revamping method includes the step of replacing primary reformer and the secondary reformer with an autothermal reforming unit comprising a fired heater and an autothermal reformer.

The advantages of the present disclosure will become apparent from the following description read together with the accompanying drawings, wherein the embodiments of the present disclosure are set forth by illustration and examples.

### BRIEF DESCRIPTION OF THE DRAWINGS

The following description of the figures of specific embodiments according to the present disclosure is only given by way of examples and is not intended to limit the present explanation, its application or use. In the figures, identical reference numerals refer to the same or similar parts and features.
FIG.1 shows a typical prior art syngas dryer configuration in ammonia production plant.
FIG.2 shows one embodiment of syngas dryer configuration in ammonia production plant according the present disclosure.
FIG. 3 shows another embodiment of the syngas dryer configuration in ammonia production plant according the present disclosure.

### DETAILED DESCRIPTION

Unless defined otherwise, all technical and scientific terms used herein have the same meaning as commonly understood by one of ordinary skill in the art to which this disclosure belongs, however, for convenience and completeness, particular terms and their meanings are set forth below.

The articles "a," "an" and "the" are used to refer to one or to more than one (i.e., to at least one) of the grammatical object of the article. As used herein, the singular forms "a", "an", and "the" include both singular and plural referents unless the context clearly dictates otherwise. The terms "comprise" and "comprising" are used in the inclusive, open sense, meaning that additional elements may be included. The terms "comprising", "comprises" and "comprised of" as used herein are synonymous with "including", "includes" or "containing", "contains", and are inclusive or open-ended and do not exclude additional, non-recited members, elements, or method steps. It is not intended to be construed as "consists of only."

The recitation of numerical ranges by endpoints includes all numbers and fractions subsumed within the respective ranges, as well as the recited endpoints. Although any methods and materials similar or equivalent to those described herein can be used in the practice or testing of the disclosure, the preferred methods, and materials are now described.

All references cited in the present specification are hereby incorporated by reference in their entirety. In particular, the teachings of all references herein specifically referred to are incorporated by reference.

As used herein, the term "front-end" is referred to the make-up gas generation section wherein the make-up gas is typically produced by conversion of hydrocarbons (e.g., natural gas). The front-end section comprises a purification section (a desulfurization converter), a conversion section (comprising a primary reformer and a secondary reformer or an autothermal reformer) and a synthesis gas preparation section (comprising one or more shift converters, a carbon dioxide removal section and a methanator).

The present disclosure generally relates to a system and a process, particularly an ammonia production plant and process, with improved technique for regeneration of the syngas dryers.

In one aspect of the present disclosure a process for regenerating a dryer of a syngas dryer assembly comprising one or more dryers in an ammonia plant, is disclosed. The process comprising steps of:
(i) introducing a compressed syngas to a first dryer of a syngas dryer assembly, the first dryer located downstream of a first syngas compressor to absorb water resulting in a dried make-up syngas, wherein the syngas dryer assembly further comprises a second dryer positioned in parallel to the first dryer, wherein the second dryer is a saturated dryer requiring regeneration, wherein a part of the dried make-up syngas is compressed in a second syngas compressor to provide a compressed make-up syngas that is further supplied to an ammonia synthesis loop forming ammonia and generating a purge gas comprising hydrogen, ammonia, methane and argon; and
(ii) introducing the purge gas to a purge gas recovery unit, whereby ammonia and hydrogen are recovered and a reject gas is generated, wherein a part of the reject gas is introduced to a third dryer positioned in series with the second dryer resulting in a dried reject gas, wherein at least a part of the dried reject gas is supplied to the second dryer, located downstream of the third dryer, thereby regenerating the second dryer and resulting in a used reject gas.

In particular, the compressed syngas is obtained by:
- contacting a charge of desulphurized natural gas and steam, with air, oxygen-enriched air or oxygen, in a conversion section resulting in a synthesis gas comprising hydrogen, CO and CO₂, the conversion section comprising at least one furnace; and
- subjecting the synthesis gas obtained in step (i) to shift conversion, carbon dioxide removal and methanation, thereby obtaining a stream of treated syngas and further passing the treated syngas through a first syngas compressor to obtain the compressed syngas.

Stated differently, in one aspect of the present disclosure an ammonia production process or a process for regenerating a dryer of a syngas dryer assembly comprising one or more dryers in an ammonia plant, is disclosed. The process comprising steps of:
(i) contacting a charge of desulphurized natural gas and steam, with air, oxygen-enriched air or oxygen, in a conversion section resulting in a synthesis gas comprising hydrogen, CO and CO₂, the conversion section comprising at least one furnace;
(ii) subjecting the synthesis gas obtained in step (i) to shift conversion, carbon dioxide removal and methanation, thereby obtaining a stream of treated syngas and further passing the treated syngas through a first syngas compressor to obtain a compressed syngas;
(iii) introducing the compressed syngas to a first dryer to absorb water resulting in a dried make-up syngas, wherein the syngas dryer assembly further comprises a second dryer positioned in parallel to the first dryer, wherein the second dryer is a saturated dryer requiring regeneration, wherein a part of the dried make-up syngas is compressed in a second syngas compressor to provide a compressed make-up syngas that is further supplied to an ammonia synthesis loop forming ammonia and generating a purge gas comprising hydrogen, ammonia, methane and argon; and
(iv) introducing the purge gas to a purge gas recovery unit, whereby ammonia and hydrogen are recovered and a reject gas is generated, wherein a part of the reject gas is introduced to a third dryer positioned in series with the second dryer resulting in a dried reject gas, wherein at least a part of the dried reject gas is supplied to the second dryer, located downstream of the third dryer, thereby regenerating the second dryer and resulting in a used reject gas.

As known to the skilled person, conventionally the natural gas desulfurization is accomplished by contacting the hydrocarbon feed with either activated carbon or zinc oxide that absorbs the H₂S.

In one embodiment according to the process of the disclosure, the conversion of the desulphurized natural gas into the synthesis gas includes a step of autothermal reforming, or a step of partial oxidation, the step of autothermal reforming or partial oxidation is performed with a steam/carbon ratio not greater than 2.

The autothermal reforming or partial oxidation is performed such that, in the front end of the plant, the conversion section comprises a fired heater located upstream of a pre-reformer, an autothermal reformer located downstream of the pre-reformer and a steam generator. The autothermal reforming or partial oxidation utilizes mixture of oxygen-enriched air or oxygen for converting the desulphurized natural gas and steam in a suitable proportion resulting in a synthesis gas comprising hydrogen, CO, and CO₂. The term "steam/carbon ratio" is alternatively referred to as "s/c ratio" and is defined as the ratio of moles of steam to moles of carbon in the reformer feed.

In one embodiment according to the process of the disclosure, the conversion of the desulphurized natural gas into the synthesis gas includes primary reforming of the desulphurized natural gas in the presence of steam performed in a primary reformer followed by air-fired secondary reforming performed in a secondary reformer.

In the front end of the plant, the conversion section comprises one or more reforming units, such as a primary reformer and a secondary reformer. The primary reformer consists of a furnace or burners usually fueled by natural gas and waste gases from the process and a reactor. A charge of desulphurized natural gas and steam is processed through primary reformer to obtain a first synthesis gas comprising hydrogen, CO, and CO₂. The first synthesis gas and a stream of pressurized process air is then fed to the secondary reformer to produce a second synthesis gas comprising hydrogen, water, nitrogen, CO, and CO₂. Oxygen and nitrogen are typically provided as the process air that is fed into the secondary reformer.

In one embodiment according to the process of the disclosure, the process further comprises a step of recirculating the used reject gas emerging from the second dryer to a burner of the primary reformer, particularly wherein the process further comprises a step of mixing a second part of the reject gas with the used reject gas before recirculating to a burner of the primary reformer.

In one embodiment according to the process of the disclosure, the process further comprises a step of recirculating the used reject gas emerging from the second dryer to a burner of the fired heater, particularly wherein the process further comprises a step of mixing a second part of the reject gas with the used reject gas before recirculating to a burner of the fired heater.

As disclosed herein, the syngas dryer assembly of the present disclosure comprises a first dryer located downstream of the first syngas compressor, that is in operation and configured for drying the compressed syngas and a second dryer is positoned in parallel to the first dryer such that the second dryer is out of operation and in need of regeneration. The third dryer is referred to the dryer that is located downstream of the purge gas recovery unit and positioned in series to the second dryer and is in operation for the adsoprtion period of 10-50 days, preferably 20-40 days. After the adsoprtion period is over, the third dryer will be out of operation and will need regeneration for a period of 10-15 hours, preferably 12 hours. The inventors have found that the reject gas emerging from the purge gas recovery unit is an effective medium for efficient regeneration of the second dryer before burning it in the furnace of reforming unit.

This is achieved by adding a new regeneration dryer, particularly a third dryer, to receive a part of the reject gas emerging from the purge gas recovery unit prior to its use, as the regeneration medium for an exisiting dryer to be regenerated, particularly a second dryer. Indeed, the used reject gas, exiting the third dryer, comprises methane and hydrogen, which can be used as fuel for the burners of the conversion section. Although the used reject gas has taken up water from the saturated dryer, the water content of the used reject gas is sufficiently low as to not impact the burner process. Additionally, the use of valuable syngas for regeneration of the second dryer can be avoided. Further, the regeneration of the second dryer can be accomplished at a much lower pressure as compared to regeneration pressures known in the art. Consequently, the flow rate of the regeneration medium can be reduced. The adsorption time of the first dryer and the second dryer is in the range of 10-50 hours, preferably in the range of 20-30 hours. The overall adsorption time of the first dryer is improved from 12hr to 20-30hrs and at the same time the regeneration time is reduced from 24 hours to 12 hours. The new regeneration dryer volume, particularly the third dryer volume, is much higher than the regeneration dryer volume for the first and the second dryer. The new regeneration dryer volume is based on the absorption period of 10-50 days, preferably 20-40 days, whereas the regeneration dryer volume for the first and the second dryer is based on the absorption period of 10-50 hours, preferably 20-30 hours. Moreover, recirculation of the preheated reject gas in the burner of the primary reformer or to the fired heater leads to reduced firing, thereby resulting in improvement of burner efficiency and reduced emmisions. Furthermore, by utilizing the reject gas in regeneration of interstage dryers, the overall power savings are around 400kw.

The purge gas recovery unit, as discused herein, aims to recover ammonia and hydrogen with high efficiency and to use the remaning reject gas enriched in methane, nitrogen and argon as a fuel in furnaces. The installation of a purge gas recovery unit not only increases ammonia production capacity but is also beneficial to save considerable amount of natural gas, decrease CO₂ emissions and to prevent ammonia loss. Further, advantages of using the reject gas emerging from the purge gas recovery unit, as a fuel gas in the furnaces has been considered economical and associated with environmental benefits earned by CO₂ emission reduction. The reject gas can be alternatively known as a waste gas or a retentive gas.

In one embodiment according to the process of the disclosure, the process further comprises a step of regeneration of the third dryer with a second part of the dried make-up syngas or by mixing the second part of the dried make-up syngas with a second part of the dried reject gas.

In one embodiment according to the process of the disclosure, the process further comprises, particularly during start-up, a step of regeneration of the second dryer with a second part of the dried make-up syngas or the process further comprises a step of regeneration of the second dryer with a second part of the dried make-up syngas mixed with a second part of the dried reject gas.

In one embodiment according to the process of the disclosure, the regeneration of the second dryer takes place at a pressure in the range of 1-20 bar, preferably at a pressure of 5-15 bar.

In one embodiment according to the process of the disclosure, the adsorption time of the first dryer and the second dryer is in the range of 10-50 hours, preferably in the range of 20-30 hours.

In one embodiment according to the process of the disclosure, the adsorption time of the third dryer is in the range of 10-50 days, preferably in the range of 20-40 days.

In one embodiment according to the process of the disclosure, the regeneration time of the second dryer and the third dryer is in the range of 10-15 hours, preferably 12 hours.

In one embodiment according to the process of the disclosure, the first dryer, the second dryer and the third dryer comprise of an adsorbent selected from the group consisting of molecular sieves, silica gel, and alumina beads.

In certain embodiments, the adsorbents in the first dryer, the second dryer and the third dryer comprise of molecular sieves. As used herein, the term "molecular siever" is referred to the adsorbents that are primarily used to remove water in addition to traces of carbon dioxide and ammonia from the syngas stream consisting mainly of nitrogen and hydrogen, with a small amount of methane. Due to the structure of these adsorbents, there is selective adsorption of the specific molecules thereby trapping moisture and impurities. Molecular sieves function on the principle of exclusion by size since the pores have a precise size. This allows smaller molecules to gain entry and be adsorbed while larger molecules can be excluded effectively.

Another aspect of the present disclosure provides a system for regenerating a dryer of a syngas dryer assembly comprising one or more dryers in an ammonia plant, the system comprising:
- a syngas dryer assembly comprising a first dryer, located downstream of a first syngas compressor, configured to receive a compressed syngas and absorb water resulting in a dried make-up syngas, and a second dryer positioned in parallel to the first syngas dryer, wherein the second dryer is a saturated dryer requiring regeneration;
- a second syngas compressor located downstream of the first dryer to receive and compress a part of the dried make-up syngas to provide a compressed make-up syngas that is further supplied to an ammonia synthesis loop forming ammonia and generating a purge gas comprising hydrogen, nitrogen, ammonia, methane and argon; and
- a purge gas recovery unit for receiving the purge gas whereby ammonia and hydrogen are recovered and a reject gas is generated, wherein a third dryer located downstream of the purge gas recovery unit and positioned in series with the second dryer, is configured to receive a part of the reject gas resulting in a dried reject gas, wherein the second dryer located downstream of the third dryer is configured to receive the dried reject gas thereby regenerating the second dryer and resulting in a used reject gas.

In particular, the system is further configured to generate a compressed syngas, particularly comprising
- a conversion section for contacting a charge of desulphurized natural gas and steam, with air, oxygen-enriched air or oxygen and resulting in a synthesis gas comprising hydrogen, water, CO and CO₂, the conversion section comprises at least one furnace; and
- a treatment section comprising a shift conversion reactor, a carbon dioxide removal unit and a methanation unit, wherein the synthesis gas emerging from the conversion section is subjected to shift conversion, carbon dioxide removal and methanation, thereby obtaining a stream of treated syngas, the syngas is further passed through a first syngas compressor to obtain the compressed syngas.

Stated differently, another aspect of the present disclosure provides an ammonia production plant or a system for regenerating a dryer of a syngas dryer assembly comprising one or more dryers in an ammonia plant, the system comprising:
- a conversion section for contacting a charge of desulphurized natural gas and steam, with air, oxygen-enriched air or oxygen and resulting in a synthesis gas comprising hydrogen, water, CO and CO₂, the conversion section comprises at least one furnace;
- a treatment section comprising a shift conversion reactor, a carbon dioxide removal unit and a methanation unit, wherein the synthesis gas emerging from the conversion section is subjected to shift conversion, carbon dioxide removal and methanation, thereby obtaining a stream of treated syngas, the syngas is further passed through a first syngas compressor to obtain a compressed syngas;
- a syngas dryer assembly comprising a first dryer, located downstream of the first syngas compressor, configured to receive the compressed syngas and absorb water resulting in a dried make-up syngas, and a second dryer positioned in parallel to the first syngas dryer, wherein the second dryer is a saturated dryer requiring regeneration; a second syngas compressor located downstream of the first dryer to receive and compress a part of the dried make-up syngas to provide a compressed make-up syngas that is further supplied to an ammonia synthesis loop forming ammonia and generating a purge gas comprising hydrogen, nitrogen, ammonia, methane and argon; and
- a purge gas recovery unit for receiving the purge gas whereby ammonia and hydrogen are recovered and a reject gas is generated, wherein a third dryer located downstream of the purge gas recovery unit and positioned in series with the second dryer, is configured to receive a part of the reject gas resulting in a dried reject gas, wherein the second dryer located downstream of the third dryer is configured to receive the dried reject gas thereby regenerating the second dryer and resulting in a used reject gas.

As known to the skilled person, conventionally the natural gas desulfurization is accomplished by contacting the hydrocarbon feed with either activated carbon or zinc oxide that absorbs the H₂S.

In one embodiment according to the system of the disclosure, the conversion section comprises a fire heater located upstream of a pre-reformer, an autothermal reformer located downstream of the pre-reformer and a steam generator, the conversion section configured for performing autothermal reforming or partial oxidation resulting in a synthesis gas.

The autothermal reforming or partial oxidation is performed such that, in the front end of the plant, the conversion section comprises a fired heater located upstream of a pre-reformer, an autothermal reformer located downstream of the pre-reformer and a steam generator. The autothermal reforming or partial oxidation utilizes mixture of oxygen-enriched air or oxygen for converting the desulphurized natural gas and steam in a suitable proportion resulting in a synthesis gas comprising hydrogen, CO, and CO₂. The term "steam/carbon ratio" is alternatively referred to as "s/c ratio" and is defined as the ratio of moles of steam to moles of carbon in the reformer feed.

In one embodiment according to the system of the disclosure, the conversion section comprises a primary reformer and a secondary reformer located downstream of the primary reformer, the conversion section configured for performing primary reforming of desulphurized natural gas in the presence of steam in the primary reformer followed by air-fired secondary reforming performed in a secondary reformer.

In the front end of the plant, the conversion section comprises one or more reforming units, such as a primary reformer and a secondary reformer. The primary reformer consists of a furnace or burners usually fueled by natural gas and waste gases from the process and a reactor. A charge of desulphurized natural gas and steam is processed through primary reformer to obtain a first synthesis gas comprising hydrogen, CO, and CO₂. The first synthesis gas and a stream of pressurized process air is then fed to the secondary reformer to produce a second synthesis gas comprising hydrogen, water, nitrogen, CO, and CO₂.

Oxygen and nitrogen are typically provided as the process air that is fed into the secondary reformer.

In one embodiment according to the system of the disclosure, the plant further comprises a means for recirculating the used reject gas emerging from the second dryer to a burner of the primary reformer or wherein the plant further comprises a means for mixing the second part of the reject gas with the used reject gas and a means for recirculating the resulting mixture to a burner of the primary reformer.

In one embodiment according to the system of the disclosure, the plant further comprises a means for recirculating the used reject gas emerging from the second dryer to the fired heater, particularly wherein the plant further comprises a means for mixing the second part of the reject gas with the used reject gas and a means for recirculating the resulting mixture to the fired heater.

As disclosed herein, the syngas dryer assembly of the present disclosure comprises a first dryer located downstream of the first syngas compressor, that is in operation and configured for drying the compressed syngas and a second dryer is positoned in parallel to the first dryer such that the second dryer is out of operation and in need of regeneration. The third dryer is referred to the dryer that is located downstream of the purge gas recovery unit and positioned in series to the second dryer and is in operation for the adsoprtion period of 10-50 days, preferably 20-40 days. After the adsoprtion period is over, the third dryer will be out of operation and will need regeneration for a period of 10-15 hours, preferably 12 hours. The inventors have found that the reject gas emerging from the purge gas recovery unit is an effective medium for efficient regeneration of the second syngas dryer before burning it in the furnace of primary reformer. This is achieved by adding a new regeneration dryer, particularly a third dryer, to receive a part of the reject gas emerging from the purge gas recovery unit prior to its use, as the regeneration medium for the exisiting dryer to be regenerated, particularly a second dryer. Indeed, the used reject gas, exiting the third dryer, comprises methane and hydrogen, which can be used as fuel for the burners of the conversion section. Although the used reject gas has taken up water from the saturated dryer, the water content of the used reject gas is sufficiently low as to not impact the burner process. Additionally, the use of valuable syngas for regeneration of the second dryer can be avoided. Further, the regeneration of the second dryer can be accomplished at a much lower pressure as compared to regeneration pressures known in the art. Consequently, the flow rate of the regeneration medium can be reduced. The adsorption time of the first dryer and the second dryer is in the range of 10-50 hours, preferably in the range of 20-30 hours. The overall adsorption time of the first dryers is improved from 12hr to 20-30hrs and at the same time the regeneration time is reduced. The new regeneration dryer volume, particularly the third dryer volume, is much higher than the regeneration dryer volume for the first and the second dryer. The new regeneration dryer volume is based on the absorption period of 10-50 days, preferably 20-40 days, whereas the regeneration dryer volume for the first and the second dryer is based on the absorption period of 10-50 hours, preferably 20-30 hours. Moreover, recirculation of the preheated reject gas in the burner of the primary reformer or to the fired heater leads to reduced firing, thereby resulting in improvement of burner efficiency and reduced emmisions. Furthermore, by utilizing the reject gas in regeneration of interstage dryers, the overall power savings are around 400kw.

The purge gas recovery unit, as discused herein, aims to recover ammonia and hydrogen with high efficiency and to use the remaning reject gas enriched in methane, nitrogen and argon as a fuel in furnaces. The installation of a purge gas recovery unit not only increases ammonia production capacity but is also beneficial to save considerable amount of natural gas, decrease CO₂ emissions and to prevent ammonia loss. Further, advantages of using the reject gas emerging from the purge gas recovery unit, as a fuel gas in the furnaces has been considered economical and associated with environmental benefits earned by CO₂ emission reduction. The reject gas can be alternatively known as a waste gas or a retentive gas.

In one embodiment according to the system of the disclosure, the regeneration of the second dryer takes place at a pressure in the range of 1-20 bar, preferably at a pressure of 5-15 bar.

In one embodiment according to the system of the disclosure, the adsorption time of the first dryer and the second dryer is in the range of 10-50 hours, preferably in the range of 20-30 hours.

In one embodiment according to the system of the disclosure, the adsorption time of the third dryer is in the range of 10-50 days, preferably in the range of 20-40 days.

In one embodiment according to the system of the disclosure, the regeneration time of the second dryer and the third dryer is in the range of 10-15 hours, preferably 12 hours.

In one embodiment according to the system of the disclosure, the system further comprises a means for providing a second part of the dried make-up syngas (9') to the third dryer (13) requiring regeneration or a means for mixing the second part of the dried make-up syngas (9') with a second part of the dried reject gas (13') and means for providing the resulting mixture to the third dryer (13) requiring regeneration.

In one embodiment according to the system of the disclosure, the first dryer, the second dryer and the third dryer comprise of an adsorbent selected from the group consisting of molecular sieve, silica gel, and alumina beads.

In certain embodiments, the adsorbents in the first dryer, the second dryer and the third dryer comprise of molecular sieves. As used herein, the term "molecular siever" is referred to the adsorbents that are primarily used to remove water in addition to traces of carbon dioxide and ammonia from the syngas stream consisting mainly of nitrogen and hydrogen, with a small amount of methane. Due to the structure of these adsorbents, there is selective adsorption of the specific molecules thereby trapping moisture and impurities. Molecular sieves function on the principle of exclusion by size since the pores have a precise size. This allows smaller molecules to gain entry and be adsorbed while larger molecules can be excluded effectively.

As used herein, the term 'first dryer' is construed to mean the dryer in operation and the term 'second dryer' is referred to the dryer out of operation or regeneration dryer. The term 'third dryer' is referred to the dryer that is in operation for the adsoprtion period of 10-50 days, preferably 20-40 days. After the adsoprtion period is over, the third dryer will be out of operation and will need regeneration for a period of 10-15 hours, preferably 12 hours.

Another aspect of the present disclosure provides use of a reject gas emerging from the purge gas recovery unit of an ammonia production plant, essentially free of carbon monoxide and carbon dioxide and comprising nitrogen, methane and argon for the regeneration of a saturated syngas dryer of a syngas dryer assembly, particularly to perform the process according to present disclosure.

Another aspect of the present disclosure provides a method of revamping an existing plant for producing ammonia from natural gas, particularly for revamping an existing plant into a plant or system according to the present disclosure, the existing plant comprising:
- a conversion section for contacting a charge of desulphurized natural gas and steam, with air, oxygen-enriched air or oxygen and resulting in a synthesis gas comprising hydrogen, water, CO and CO₂, the conversion section comprises at least one furnace;
- a treatment section comprising a shift conversion reactor, a carbon dioxide removal unit and a methanation unit, wherein the synthesis gas emerging from the conversion section is subjected to shift conversion, carbon dioxide removal and methanation, thereby obtaining a stream of treated syngas, the syngas is further passed through a first syngas compressor to obtain a compressed syngas;
- a syngas dryer assembly comprising a first dryer configured to receive the compressed syngas and absorb water resulting in a dried make-up syngas, and a second dryer positioned in parallel to the first dryer, wherein the second dryer is a saturated dryer requiring regeneration; a second syngas compressor located downstream of the first dryer to receive and compress a part of the dried make-up syngas to provide a compressed make-up syngas that is further supplied to an ammonia synthesis loop forming ammonia and generating a purge gas comprising hydrogen, nitrogen, ammonia, methane and argon; and
- a purge gas recovery unit for receiving the purge gas whereby ammonia and hydrogen are recovered and a reject gas is generated;
wherein the method comprises the steps of:
(i) installing a third dryer downstream of the purge gas recovery unit and positioned in series with the second dryer configured for receiving a part of the reject gas resulting in a dried reject gas; and
(ii) providing a part of the dried reject gas emerging from the third dryer to the second dryer located downstream of the third dryer, thereby regenerating the second dryer, and resulting in a used reject gas.

In one embodiment according to the method of revamping of the disclosure, the method further comprises a step of recirculating the used reject gas emerging from the second dryer to a burner of the primary reformer or the method further comprises a step of mixing a second part of the reject gas with the used reject gas before recirculating to a burner of the primary reformer.

In one embodiment according to the method of revamping of the disclosure, the method further comprises a step of regeneration of the third dryer with a second part of the dried make-up syngas or by mixing the second part of the dried make-up syngas with a second part of the dried reject gas.

In one embodiment according to the method of revamping of the disclosure, wherein the conversion section of the existing plant comprises a primary reformer and a secondary reformer and wherein the revamping method includes the step of replacing primary reformer and the secondary reformer with an autothermal reforming unit comprising a fired heater and an autothermal reformer.

Advantageously, the method of revamping of an existing ammonia production plant provides for minimum modifications of the existing plant while integrating the third dryer as a new regeneartion dryer, that utilizes the reject gas emerging from the purge gas recovery unit, with low capital expenditure and with few changes on the ammonia prodcution process.

It is understood that in the present application, the first dryer may be the dryer in need of regeneration and the second dryer will be in operation. Indeed, when the first dryer reaches capacity, it will be in need of regeneration, and will be regenerated using part of the reject gas of the purge gas recovery unit by a method or system according to the present application. The compressed syngas will be provided to the regenerated second dryer, for drying the first compressed syngas. Stated differently, it is understood that the syngas dryer assembly is also configured, by suitable distributing means, such as piping and valves, to use the second dryer, after its regeneration with part of the reject gas of the purge gas recovery unit, for dyring the compressed syngas, and to use part of the reject gas of the purge gas recovery unit for regenerating the first dryer when saturated according to a method of the present application.

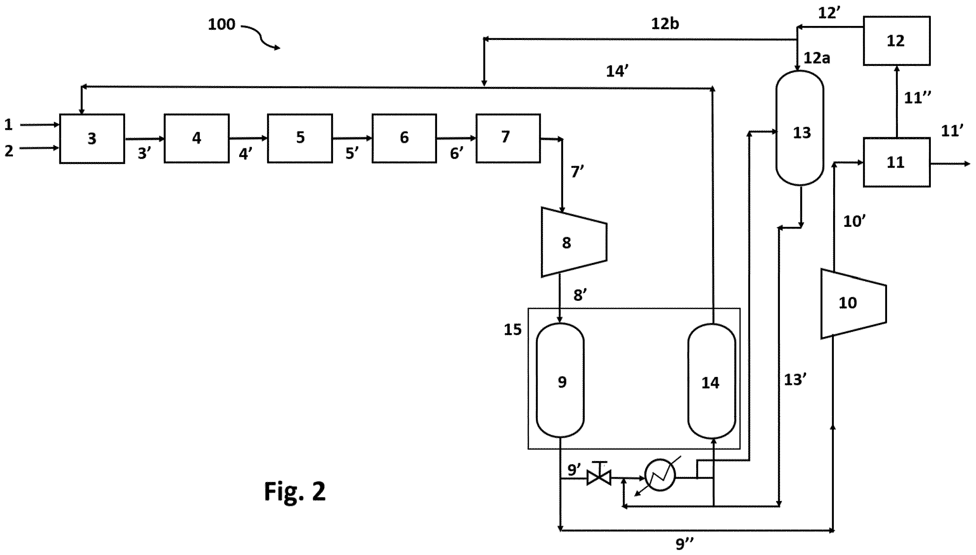

An embodiment of the ammonia production plant (100) of the present disclosure is illustrated in **FIG. 2****,** particularly focusing on the different process gas streams. In the front end of the plant, the reforming section comprises a primary reformer (3) and a secondary reformer (4). The primary reformer consists of a furnace or burners (not shown) fueled by natural gas and waste gases from the process and a reactor (not shown). A charge of desulphurized natural gas (1) and steam (2) are processed through primary reformer (3) to obtain a first synthesis gas (3') comprising hydrogen, CO, and CO₂. The first synthesis gas (3') and a stream of pressurized process air (not shown) is then fed to the secondary reformer (4) to produce a second synthesis gas (4') comprising hydrogen, water, nitrogen, CO, and CO₂. Oxygen and nitrogen are typically provided from process air that is fed into the secondary reformer. The second synthesis gas (4') is further subjected to a shift conversion in a shift conversion reactor (5) after excess heat has been recovered from the second synthesis gas (4'). Upon shift conversion, a CO₂ enriched stream (5') is formed. In a further step, carbon dioxide is removed from the CO₂ enriched stream (5') in a carbon dioxide removal unit (6) resulting in a CO₂ depleted syngas (6'). The residual carbon monoxide (CO) and carbon dioxide (CO₂) are almost eliminated in a methanator (7) resulting in a stream of syngas (7') mainly composed of hydrogen and nitrogen. The syngas (7') is passed through a first syngas compressor (8) to obtain a compressed syngas stream (8') and therafter the compressed syngas stream (8') is passed through a first dryer (9) of a syngas dryer assembly (15), the first syngas dryer (9) comprising suitable molecular sieves to absorb water. This results in formation of a dried make-up syngas. At least a first part of the dried make-up syngas (9") is further compressed in a second syngas compressor (10) to provide a compressed make-up syngas (10'). The compressed make-up syngas (10') is supplied to an ammonia synthesis loop (11) forming ammonia (11') and generating a purge gas (11") comprising hydrogen, nitrogen, ammonia, methane, and argon. The purge gas (11") hence obtained is introduced to the purge gas recovery unit (12), whereby ammonia and hydrogen are recovered and a reject gas (12') is generated. A part of the reject gas (12a) is thereafter introduced to a third dryer (13) resulting in a dried reject gas (13'). The second dryer (14) of the syngas dryer assembly (15), located downstream of the third molecular sieve dryer (13), is configured to receive a part of the dried reject gas (13') emerging from the third dryer (13), thereby regenerating the second dryer (14), and resulting in a used reject gas (14'). The dried reject gas (14') emerging from the second dryer (14) is further recirculated to a burner of the primary reformer (3). During the operation of the ammonia production process, the dryer (13) that is in operation gradually becomes charged or saturated with water. When this dryer is charged or saturated with water to an optimum level or to capacity, it is subjected to regeneration with a second part of the dried make-up syngas (9') or by mixing the second part of the dried make-up syngas (9') with a second part of the dried reject gas. During the start-up of the plant, when reject gas (12a) is not available for regeneration, the second dryer can be regenerated with a second part of the dried make-up syngas (9') or with a second part of the dried make-up syngas (9') mixed with a second part of the dried reject gas. A skilled person will realize that the setup in Fig. 2 can be reproduced such that first dryer is in need of regeneration after being charged or saturated with water and the second dryer is drying compressed syngas.

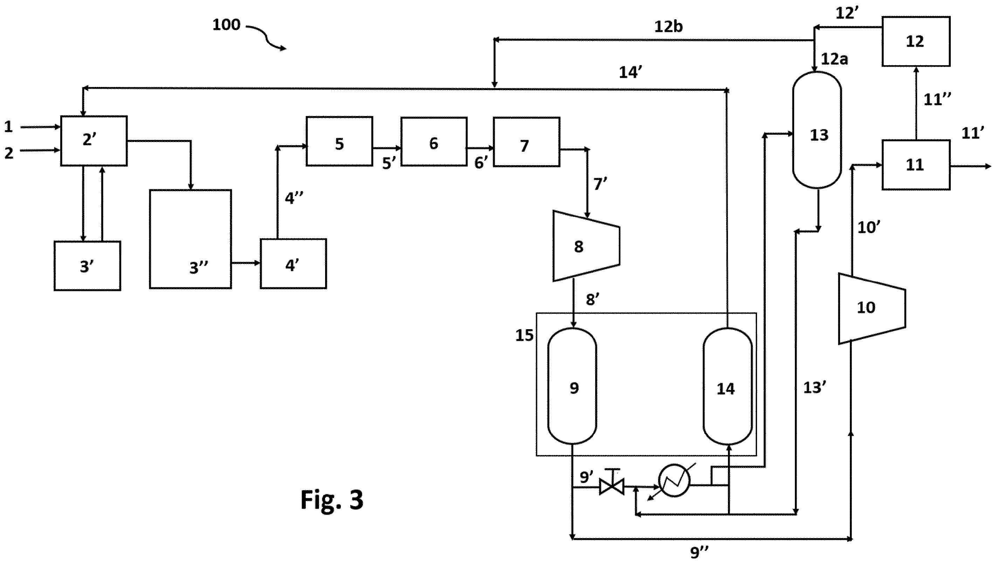

Another embodiment of the ammonia production plant of the present disclosure is illustrated in **FIG. 3****.** In the front end of the plant, the desulphurized natural gas (1) and steam (2) is heated in a fired heater (2') and then pre-reformed in a pre-reformer (3'). The pre-reformed gas then was fired with oxygen (O₂) in an autothermal reformer (3"), which provided a gas stream comprising hydrogen, CO and CO₂. The oxygen supplied to the autothermal reformer (3") was supplied from an air separation unit (not shown). The heat of the stream leaving the autothermal reformer then was exchanged with water in a steam generator (4') such as to produce steam and a syntheis gas (4") comprising 7% CO₂, 14% CO and 55% H₂, having a lower temperature than the gaseous stream exiting the autothermal reformer (3"). The synthesis gas (4") is further subjected to a shift conversion in a shift conversion reactor (5) after excess heat has been recovered from the synthesis gas (4"). Upon shift conversion, a CO₂ enriched stream (5') is formed. In a further step, carbon dioxide is removed from the CO₂ enriched stream (5') in a carbon dioxide removal unit (6) resulting in a CO₂ depleted syngas (6'). The residual carbon monoxide (CO) and carbon dioxide (CO₂) are almost eliminated in a methanator (7) resulting in a stream of syngas (7') mainly composed of hydrogen and nitrogen. The syngas (7') is passed through a first syngas compressor (8) to obtain a compressed syngas stream (8') and therafter the compressed syngas stream (8') is passed through a first dryer (9) of a syngas dryer assemby (15) comprising suitable molecular sieves to absorb water. This results in formation of a dried make-up syngas (9") that is further compressed in a second syngas compressor (10) to provide a compressed make-up syngas (10'). The compressed make-up syngas (10') is supplied to an ammonia synthesis loop (11) forming ammonia (11') and generating a purge gas (11") comprising hydrogen, nitrogen, ammonia, methane, and argon. The purge gas (11") hence obtained is introduced to the purge gas recovery unit (12), whereby ammonia and hydrogen are recovered and a reject gas (12') is generated. The reject gas (12') is further introduced to a third dryer (13) resulting in a dried reject gas (13'). The second dryer (14) of the syngas dryer assembly, located downstream of the third molecular sieve dryer (13), is configured to receive the dried reject gas (13') emerging from the third dryer (13), thereby regenerating the second dryer (14), and resulting in a used reject gas (14'). The dried reject gas (14') emerging from the second dryer (14) is further recirculated to a burner of the primary reformer (3). When this dryer is charged or saturated with water to an optimum level or to capacity, it is subjected to regeneration with a second part of the dried make-up syngas (9') or by mixing the second part of the dried make-up syngas (9') with a second part of the dried reject gas. During the start-up of the plant, when reject gas (12') is not available for regeneration, the second dryer can be regenerated with a second part of the dried make-up syngas (9') or with a second part of the dried make-up syngas (9') mixed with a second part of the dried reject gas. A skilled person will realize that the setup in Fig. 3 can be reproduced such that first dryer is in need of regeneration after being charged or saturated with water and the second dryer is drying compressed syngas.

The process and the plant for producing ammonia of the present disclosure offer several advantages. The reject gas emerging from the purge gas recovery unit can be used as an effective medium for efficient regeneration of one or more syngas dryers before burning it in the furnace of the reforming unit. This is achieved by adding a new regeneration dryer (a third dryer), to a part of the reject gas emerging from the purge gas recovery unit prior to its use as the regeneration medium for the exisiting regeneration dryer (a second dryer). Thus, the use of valuable syngas for regeneration of the second dryer can be avoided. Further, the regeneration of the second dryer can be accomplished at a much lower pressure as compared to regeneration pressures known in the art. Consequently, the flow rate of the regeneration medium can be reduced. The overall adsorption time of the dryers is thus improved and at the same time the regeneration time is reduced. Moreover, recirculation of the preheated reject gas in the furnace of the reforming unit leads to reduced firing thereby in the front-end resulting in improvement of burner efficiency and reduced CO₂ emmisions. Furthermore by utilizing the reject gas in regeneration of interstage dryers, the overall power savings are around 400kw.

While the preferred embodiments of the present disclosure have been shown and described, it will be apparent to those skilled in the art that changes and modifications may be made therein without departing from the spirit of the invention, the scope of which is defined by the appended claims.

## Claims

1. A process for regenerating a dryer of a syngas dryer assembly (15), in an ammonia plant (100), the process comprising steps of:
(i) contacting a charge of desulphurized natural gas (1) and steam (2), with air, oxygen-enriched air or oxygen, in a conversion section resulting in a synthesis gas comprising hydrogen, CO and CO₂, the conversion section comprising at least one furnace;
(ii) subjecting the synthesis gas obtained in step (i) to shift conversion, carbon dioxide removal and methanation, thereby obtaining a stream of treated syngas (7') and further passing the treated syngas (7') through a first syngas compressor (8) to obtain a compressed syngas (8');
(iii) introducing the compressed syngas (8') to a first dryer (9) of the syngas dryer assembly (15), located downstream of the first syngas compressor (8), to absorb water resulting in a dried make-up syngas (9'), wherein the syngas dryer assembly (15) further comprises a second dryer (14) positioned in parallel to the first dryer (9), wherein the second dryer is a saturated dryer requiring regeneration, wherein a part of the dried make-up syngas (9") is compressed in a second syngas compressor (10) to provide a compressed make-up syngas (10') that is further supplied to an ammonia synthesis loop (11) forming ammonia (11') and generating a purge gas (11") comprising hydrogen, ammonia, methane and argon; and
(iv) introducing the purge gas (11") to a purge gas recovery unit (12), whereby ammonia and hydrogen are recovered and a reject gas (12') is generated, wherein a part of the reject gas (12a) is introduced to a third dryer (13) positioned in series with the second dryer, resulting in a dried reject gas (13'), wherein at least a part of the dried reject gas (13') is supplied to the second dryer (14) of the syngas dryer assembly (15), wherein the second dryer (14) is located downstream of the third dryer (13), thereby regenerating the second dryer (14) and resulting in a used reject gas (14').

2. The process according to claim 1, wherein the conversion of the desulphurized natural gas into the synthesis gas (4") includes a step of autothermal reforming, or a step of partial oxidation, the step of autothermal reforming or partial oxidation is performed with a steam/carbon ratio not greater than 2; or
wherein the conversion of the desulphurized natural gas into the synthesis gas (4') includes primary reforming of the natural gas in the presence of steam performed in a primary reformer (3) followed by air-fired secondary reforming performed in a secondary reformer (4).

3. The process according to claims 1 and 2, wherein the process further comprises a step of recirculating the used reject gas (14') emerging from the second dryer (14) to a burner of the primary reformer (3), particularly wherein the process further comprises a step of mixing a second part of the reject gas (12b) with the used reject gas (14') before recirculating to a burner of the primary reformer (3).

4. The process according to claims 1 and 2, wherein the process further comprises a step of regeneration of the third dryer (13) with a second part of the dried make-up syngas (9') or by mixing the second part of the dried make-up syngas (9') with a second part of the dried reject gas (13').

5. The process according to any of the claims 1 to 4, wherein the regeneration of the second dryer (14) takes place at a pressure in the range of 1-20 bar, preferably at a pressure of 5-15 bar.

6. The process according to any of the claims 1 to 5, wherein the adsorption time of the first dryer (9) and the second dryer (14) is in the range of 10-50 hours, preferably in the range of 20-30 hours and/or wherein the adsorption time of the third dryer (13) is in the range of 10-50 days, preferably in the range of 20-40 days.

7. A system for regenerating a dryer of a syngas dryer assembly comprising one or more dryers in an ammonia plant (100) , the system comprising:
- a conversion section for contacting a charge of desulphurized natural gas (1) and steam (2), with air, oxygen-enriched air or oxygen and resulting in a synthesis gas comprising hydrogen, water, CO and CO₂, the conversion section comprises at least one furnace;
- a treatment section comprising a shift conversion reactor (5), a carbon dioxide removal unit (6) and a methanation unit (7), wherein the synthesis gas emerging from the conversion section is subjected to shift conversion, carbon dioxide removal and methanation, thereby obtaining a stream of treated syngas (7'), the syngas (7') is further passed through a first syngas compressor (8) to obtain a compressed syngas (8');
- a syngas dryer assembly (15), located downstream of the first syngas compressor (8), comprising a first dryer (9) configured to receive the compressed syngas (8') and absorb water resulting in a dried make-up syngas, and a second dryer (14) positioned in parallel to the first dryer (9), wherein the second dryer (14) is a saturated dryer requiring regeneration; a second syngas compressor (10) located downstream of the first dryer (9) to receive and compress a part of the dried make-up syngas (9") to provide a compressed make-up syngas (10') that is further supplied to an ammonia synthesis loop (11) forming ammonia (11') and generating a purge gas (11") comprising hydrogen, nitrogen, ammonia, methane and argon; and
- a purge gas recovery unit (12) for receiving the purge gas (11") whereby ammonia and hydrogen are recovered and a reject gas (12') is generated, wherein a third dryer (13) located downstream of the purge gas recovery unit (12) and positioned in series with the second dryer (14), is configured to receive a part of the reject gas (12a) resulting in a dried reject gas (13'), wherein the second dryer (14) located downstream of the third dryer (13) is configured to receive the dried reject gas (13') thereby regenerating the second dryer (14) and resulting in a used reject gas (14').

8. The system according to claim 7, wherein the conversion section comprises a fired heater (2') located upstream of a pre-reformer (3'), an autothermal reformer (3") located downstream of the pre-reformer (3') and a steam generator (4"), the conversion section configured for performing autothermal reforming or partial oxidation resulting in a synthesis gas (4"), or
wherein the conversion section comprises a primary reformer (3) and a secondary reformer (4) located downstream of the primary reformer (3), the conversion section configured for performing primary reforming of desulphurized natural gas in the presence of steam in the primary reformer (3) followed by air-fired secondary reforming performed in a secondary reformer (4).

9. The system according to claims 7 and 8, wherein the plant further comprises a means for recirculating the used reject gas (14') emerging from the second dryer (14) to a burner of the primary reformer (3) particularly wherein the plant further comprises a means for mixing the second part of the reject gas (12b) with the used reject gas (14') and a means for recirculating the resulting mixture to a burner of the primary reformer (3).

10. The system according to claims 7 and 8, wherein the system further comprises a means for providing a second part of the dried make-up syngas (9') to the third dryer (13) requiring regeneration or a means for mixing the second part of the dried make-up syngas (9') with a second part of the dried reject gas (13') and means for providing the resulting mixture to the third dryer (13) requiring regeneration.

11. The system according to any of the claims 7 to 10, wherein the first dryer (9), the second dryer (14) and the third dryer (13) comprise an adsorbent selected from the group consisting of molecular sieve, silica gel, and alumina beads.

12. Use of a reject gas emerging from the purge gas recovery unit of an ammonia production plant, essentially free of carbon monoxide and carbon dioxide and comprising nitrogen, methane and argon for the regeneration of a saturated syngas dryer in a syngas dryer assembly, particularly to perform the process according to any one of claims 1-6.

13. A method of revamping an existing plant (100) for producing ammonia from natural gas, the existing plant comprising:
- a conversion section for contacting a charge of desulphurized natural gas (1) and steam (2), with air, oxygen-enriched air or oxygen and resulting in a synthesis gas comprising hydrogen, water, CO and CO₂, the conversion section comprises at least one furnace;
- a treatment section comprising a shift conversion reactor (5), a carbon dioxide removal unit (6) and a methanation unit (7), wherein the synthesis gas emerging from the conversion section is subjected to shift conversion, carbon dioxide removal and methanation, thereby obtaining a stream of treated syngas (7'), the syngas (7') is further passed through a first syngas compressor (8) to obtain a compressed syngas (8');
- a syngas dryer assembly (15) located downstream of the first syngas compressor (8), the syngas dryer assembly (15) comprising a first dryer (9) configured to receive the compressed syngas (8') and absorb water resulting in a dried make-up syngas, and a second dryer (14) positioned in parallel to the first dryer (9), wherein the second dryer (14) is a saturated dryer requiring regeneration; a second syngas compressor (10) located downstream of the first dryer (9) to receive and compress a part of the dried make-up syngas (9") to provide a compressed make-up syngas (10') that is further supplied to an ammonia synthesis loop (11) forming ammonia (11') and generating a purge gas (11") comprising hydrogen, nitrogen, ammonia, methane and argon; and
- a purge gas recovery unit (12) for receiving the purge gas (11") whereby ammonia and hydrogen are recovered and a reject gas (12') is generated;
wherein the method comprises the steps of:
(i) installing a third dryer (13) downstream of the purge gas recovery unit (12) and positioned in series with the second dryer (14) configured for receiving a part of the reject gas (12a) resulting in a dried reject gas (13'); and
(ii) providing a part of the dried reject gas (13') emerging from the third dryer (13) to the second dryer (14) located downstream of the third dryer (13), thereby regenerating the second dryer (14), and resulting in a used reject gas (14').

14. The method of revamping according to claim 13, wherein the method further comprises a step of recirculating the used reject gas (14') emerging from the second dryer (14) to a burner of the primary reformer (3) or wherein the method further comprises a step of mixing a second part of the reject gas (12b) with the used reject gas (14') before recirculating to a burner of the primary reformer (3).

15. The method of revamping according to claim 13 or 14, wherein the method further comprises a step of regeneration of the third dryer (13) with a second part of the dried make-up syngas (9') or by mixing the second part of the dried make-up syngas (9') with a second part of the dried reject gas (13').
